# EUROPEAN PATENT APPLICATION

(11) **EP 3 285 443 A1**
(43) Date of publication of application: **21.02.2018**
(21) Application number: 17186516.5
(22) Date of filing: 16.08.2017
(51) Int. Cl.: H04L 12/721, H04B 3/58

(54) **METHOD FOR SELECTING RELAY STATION IN POWER LINE NETWORK, AND STATION**

(30) Priority: 17.08.2016 CN 201610680657
(71) Applicant: HUAWEI TECHNOLOGIES CO., LTD., Guangdong 518129 (CN)
(72) Inventor: GUO, Pan, Shenzhen, Guangdong 518129 (CN)
(74) Representative: Pfenning, Meinig & Partner mbB

(57) **Abstract**

Embodiments of the present invention disclose a method for selecting a relay station in a power line network, and a station, so as to reduce a quantity of maintenance packets and reduce occupied bandwidth resources. The method in the embodiments of the present invention includes: receiving, by a first station, a maintenance packet sent by each second station, where each second station sends the maintenance packet by using a preset transmit power, and a difference between a maximum transmit power supported by each second station and the preset transmit power is not less than a power required to compensate for asymmetry between the first station and each second station; determining, by the first station, a success rate of the maintenance packet sent by each second station; and selecting, by the first station from multiple second stations, a station as a relay station of the first station according to the success rate.

## Description

### TECHNICAL FIELD

The present invention relates to the field of communications technologies, and in particular, to a method for selecting a relay station in a power line network, and a station.

### BACKGROUND

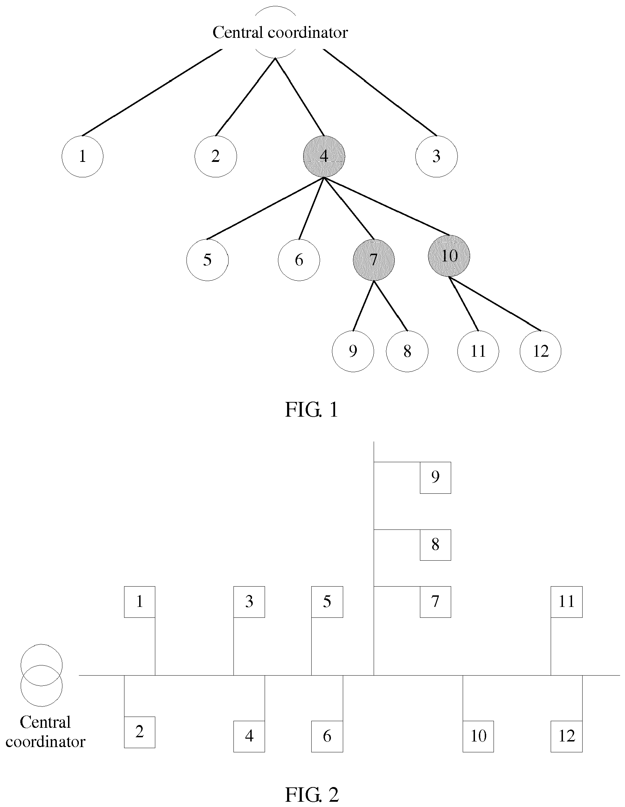

A shared network is a communications network established between communications terminals that use a shared medium. A common shared network includes a power line network. Because a power line is a shared medium in the power line network, in an ideal condition, a carrier communication signal transmitted on the power line is successfully received by all communications devices (stations) on the power line. In actual application, a transmission distance of the carrier communication signal is relatively limited, and a range covered by the power line is relatively large. Being affected by factors such as attenuation and noise, the power line network generally has a multilevel network topology including a relay station. Specifically, for a multilevel network topology diagram, refer to FIG. 1. In FIG. 1, the multilevel network topology diagram includes a central coordinator (CCO) on a transformer, a meter 1 to a meter 12, and power lines used to connect the CCO and the meters. The meter may be represented by a station. A meter 4, a meter 7, and a meter 10 are relay stations. A relay station is used to ensure that communication between stations in the power line network can be completed, so that a relatively reliable communication link is maintained.

In a current power line network, an existing solution provides a method for forming a multilevel network topology including a relay station. For details, refer to FIG. 2. FIG. 2 is a physical connection, of the power line network, that is associated with FIG. 1, and includes a central coordinator, a meter (station), and a power line. A station 5 is used as an example. The station 5 periodically sends a maintenance packet. A station 1, a station 2, a station 3, and a station 4 (It is assumed that the station 1, the station 2, the station 3, and the station 4 are upper-level stations of the station 5) receive the maintenance packet. The station 1, the station 2, the station 3, and the station 4 collect statistics about success rates of receiving in a cycle, and then, each of the station 1, the station 2, the station 3, and the station 4 feeds back, by using a maintenance packet, a receiving success rate of the maintenance packet sent by the station 5. In this case, the station 5 learns success rates of receiving, by the station 1, the station 2, the station 3, and the station 4, the maintenance packet sent by the station 5. In this way, quality of communication between the station 5 and each of the station 1, the station 2, the station 3, and the station 4 may be evaluated according to the success rates of receiving, by the station 1, the station 2, the station 3, and the station 4, the maintenance packet sent by the station 5. Then, a station is selected, from the station 1, the station 2, the station 3, and the station 4, as an upper-level relay station of the station 5. For example, the station 4 associated with FIG. 1 is selected as the upper-level relay station of the station 5. The maintenance packet is a packet for maintaining a relay relationship between stations. The maintenance packet has two functions. One function is that content information carried in the maintenance packet may be used for information exchange. The other function is that a communication signal of the maintenance packet may be used for communications channel quality evaluation.

Because a receiving success rate needs to be fed back by using a maintenance packet in a relay station selection process, and in actual application, there are many stations in a power line network, many maintenance packets are required to feed back receiving success rates. Therefore, a quantity of maintenance packets is increased, and more bandwidth resources are consumed because a relatively large quantity of maintenance packets certainly occupy more transmission time.

### SUMMARY

Embodiments of the present invention provide a method for selecting a relay station in a power line network, and a station, so as to reduce a quantity of maintenance packets and reduce occupied bandwidth resources.

A first aspect of the present invention provides a method for selecting a relay station in a power line network, and the power line network includes a first station and multiple second stations. The method includes: receiving, by the first station, a maintenance packet sent by each second station, where each second station sends the maintenance packet by using a preset transmit power, and a difference between a maximum transmit power supported by each second station and the preset transmit power is not less than a power required to compensate for asymmetry between the first station and each second station; determining, by the first station, a success rate of the maintenance packet sent by each second station, to obtain multiple success rates; and selecting, by the first station from multiple second stations, a station as a relay station of the first station according to the obtained multiple success rates.

The preset transmit power may be a transmit power obtained by means of actual testing in a project development process. The preset transmit power is a transmit power lower than the maximum transmit power.

A shared network includes multiple stations. The first station is one of the multiple stations in the shared network, and the multiple second stations are stations in the multiple stations in the shared network other than the first station.

Each second station periodically sends the maintenance packet outward. The maintenance packet may be received by some neighboring stations. Each second station may send one maintenance packet or multiple maintenance packets in one cycle.

What is different from the prior art is that no feedback is required in a relay station selection process in the present invention, and therefore, a maintenance packet required for a feedback is saved, so that a quantity of maintenance packets is reduced, and occupied bandwidth resources are reduced.

In some possible implementations, after the selecting, by the first station from multiple second stations, a station as a relay station of the first station according to the obtained multiple success rates, the method further includes:
sending, by the first station, M first service packets to the relay station by using the maximum transmit power;
receiving, by the first station, N first confirmation packets sent by the relay station, where the first confirmation packets are used to indicate that the first service packets are received by the relay station, M and N are positive integers greater than zero, and M is greater than or equal to N;
determining, by the first station, a sending success rate of the first service packets according to the received N first confirmation packets and the sent M first service packets, where the sending success rate of the first service packets is N/M;
determining, by the first station, whether N/M is greater than a preset threshold; and
if N/M is greater than the preset threshold, skipping initiating a change operation for the relay station; or if N/M is less than or equal to the preset threshold, initiating a change operation for the relay station.

What is different from the prior art is that the maintenance packet and the first service packets are sent by using different transmit powers. In a network topology formed by using the maintenance packet, when the first service packets are transmitted, because the transmit power used by the first station to transmit the first service packets is greater than the preset transmit power, the success rate is higher in a process of transmitting the first service packets, and the success rate exceeds a success rate of the maintenance packet. Because the success rate of the first service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

During change evaluation of the relay station, if the sending success rate of the first service packets is relatively high, for example, if the sending success rate is greater than the preset threshold, the change evaluation of the relay station may end, and the change operation may not be initiated for the relay station. Alternatively, if the sending success rate of the first service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

The preset threshold may be set by the first station, for example, the preset threshold is 80%.

In some other possible implementations, after the first station receives a second service packet sent by the relay station by using the maximum transmit power, the method further includes: sending, by the first station, a confirmation packet used as a feedback on the second service packet to the relay station, so that the relay station determines a sending success rate of the second service packet according to the confirmation packet.

In some other possible implementations, after the selecting, by the first station from multiple second stations, a station as a relay station of the first station according to the obtained multiple success rates, the method further includes:
receiving, by the first station, P second service packets sent by the relay station by using the maximum transmit power; and
sending, by the first station, Q second confirmation packets to the relay station, so that the relay station determines a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

During change evaluation of the relay station, if the sending success rate of the second service packets is relatively high, for example, if the sending success rate is greater than the preset threshold, the change evaluation of the relay station may end, and the change operation may not be initiated for the relay station. Alternatively, if the sending success rate of the second service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

What is different from the prior art is that the maintenance packet and the second service packets are sent by using different transmit powers. In a network topology formed by using the maintenance packet, when the second service packets are transmitted, because the transmit power used by the relay station to transmit the second service packets is greater than the preset transmit power, the success rate is higher in a process of transmitting the second service packets, and the success rate exceeds a success rate of the maintenance packet. Because the success rate of the second service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

In some other possible implementations, the selecting, by the first station from multiple second stations, a station as a relay station of the first station according to the obtained multiple success rates includes:
determining, by the first station, a highest success rate according to the obtained multiple success rates; and
selecting, by the first station, a second station corresponding to the highest success rate as the relay station of the first station.

A second aspect of the present invention further provides a method for selecting a relay station in a power line network. The method includes: obtaining, by a second station, a preset transmit power; and sending, by the second station, a maintenance packet to a first station by using the preset transmit power, so that the first station determines a success rate of the received maintenance packet, and determines, according to the success rate, whether to select the second station as a relay station of the first station, where a difference between a maximum transmit power supported by the second station and the preset transmit power is not less than a power required to compensate for asymmetry between the first station and the second station.

A shared network includes multiple stations. The first station and the second station each are one of the multiple stations in the shared network.

The second station periodically sends the maintenance packet outward. The maintenance packet may be received by some neighboring stations.

In the shared network, cycles of sending a maintenance packet by all the stations are consistent. Each station needs to periodically send a maintenance packet and receive a maintenance packet, and each station sends a same quantity of maintenance packets in all cycles.

What is different from the prior art is that no feedback is required in a relay station selection process in the present invention, and therefore, a maintenance packet required for a feedback is saved, so that a quantity of maintenance packets is reduced, and occupied bandwidth resources are reduced.

In some possible implementations, if the second station is the relay station of the first station, after the sending, by the second station, a maintenance packet to a first station by using the preset transmit power, the method further includes: receiving, by the second station, M first service packets sent by the first station by using the maximum transmit power; and sending, by the second station, N first confirmation packets to the first station, so that the first station determines a sending success rate of the first service packets according to the received N first confirmation packets and the sent M first service packets, where the first confirmation packets are used to indicate that the first service packets are received by the second station, M and N are positive integers greater than zero, and M is greater than or equal to N.

Each time when the first station sends a first service packet to the second station, the first station waits for a first confirmation packet sent by the second station. If the first station receives the first confirmation packet, the first service packet sent by the first station is successfully sent. Therefore, the sending success rate of the first service packets is obtained by the first station by means of statistics collection according to a total quantity of sending successes of first service packets in a specific time.

What is different from the prior art is that after a stable relay relationship is formed between the first station and the second station, when the first station needs to send the first service packets, the first station sends the first service packets to the second station by using the maximum transmit power. Because the transmit power used by the first station to send the first service packets is greater than the preset transmit power, signal strength is stronger, and there is a relatively high probability that communications channel asymmetry between the first station and the second station can be compensated for, the success rate of receiving the first service packets by the second station is quite high. Because the success rate of the first service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

In some other possible implementations, if the second station is the relay station of the first station, after the sending, by the second station, a maintenance packet to a first station by using the preset transmit power, the method further includes: sending, by the second station, P second service packets to the first station by using the maximum transmit power; receiving, by the second station, Q second confirmation packets sent by the first station; and determining, by the second station, a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

What is different from the prior art is that when the second station needs to send the second service packets, the second station sends the second service packets to the first station by using the maximum transmit power. Because the transmit power used by the second station to send the second service packets is greater than the preset transmit power, and signal strength is stronger, the success rate of receiving the second service packets by the first station is quite high. Because the success rate of the second service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

A third aspect of the present invention provides a first station in a power line network, including: a first receiving module, configured to receive a maintenance packet sent by each second station, where each second station sends the maintenance packet by using a preset transmit power, and a difference between a maximum transmit power supported by each second station and the preset transmit power is not less than a power required to compensate for asymmetry between the first station and each second station; a first determining module, configured to determine a success rate of the maintenance packet sent by each second station, to obtain multiple success rates; and a selection module, configured to select, from multiple second stations, a station as a relay station of the first station according to the obtained multiple success rates.

What is different from the prior art is that no feedback is required in a relay station selection process in the present invention, and therefore, a maintenance packet required for a feedback is saved, so that a quantity of maintenance packets is reduced, and occupied bandwidth resources are reduced.

In some possible implementations, the first station further includes: a first sending module, configured to send M first service packets to the relay station by using the maximum transmit power; a second receiving module, configured to receive N first confirmation packets sent by the relay station, where the first confirmation packets are used to indicate that the first service packets are received by the relay station, M and N are positive integers greater than zero, and M is greater than or equal to N; a second determining module, configured to determine a sending success rate of the first service packets according to the received N first confirmation packets and the sent M first service packets; a judging module, configured to determine whether the sending success rate of the first service packets is greater than a preset threshold; and a processing module, configured to: if the sending success rate of the first service packets is greater than the preset threshold, skip initiating a change operation for the relay station; or if the sending success rate of the first service packets is less than or equal to the preset threshold, initiate a change operation for the relay station.

What is different from the prior art is that the maintenance packet and the first service packets are sent by using different transmit powers. In a network topology formed by using the maintenance packet, when the first service packets are transmitted, because the transmit power used by the first station to transmit the first service packets is greater than the preset transmit power, the success rate is higher in a process of transmitting the first service packets, and the success rate exceeds a success rate of the maintenance packet. Because the success rate of the first service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

During change evaluation of the relay station, if the sending success rate of the first service packets is relatively high, for example, if the sending success rate is greater than the preset threshold, the change evaluation of the relay station may end, and the change operation may not be initiated for the relay station. Alternatively, if the sending success rate of the first service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

The preset threshold may be set by the first station, for example, the preset threshold is 80%.

In some other possible implementations, the first station further includes: a third receiving module, configured to receive P second service packets sent by the relay station by using the maximum transmit power; and a second sending module, configured to send Q second confirmation packets to the relay station, so that the relay station determines a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

What is different from the prior art is that the maintenance packet and the second service packets are sent by using different transmit powers. In a network topology formed by using the maintenance packet, when the second service packets are transmitted, because the transmit power used by the relay station to transmit the second service packets is greater than the preset transmit power, the success rate is higher in a process of transmitting the second service packets, and the success rate exceeds a success rate of the maintenance packet. Because the success rate of the second service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

During change evaluation of the relay station, if the sending success rate of the second service packets is relatively high, for example, if the sending success rate is greater than the preset threshold, the change evaluation of the relay station may end, and the change operation may not be initiated for the relay station. Alternatively, if the sending success rate of the second service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

In some other possible implementations, the selection module is specifically configured to: determine a highest receiving success rate according to the obtained multiple success rates, and select a second station corresponding to the highest success rate as the relay station of the first station.

A fourth aspect of the present invention provides a second station in a power line network, including: an obtaining module, configured to obtain a preset transmit power; and a first sending module, configured to send a maintenance packet to a first station by using the preset transmit power, so that the first station determines a success rate of the received maintenance packet, and determines, according to the success rate, whether to select the second station as a relay station of the first station, where a difference between a maximum transmit power supported by the second station and the preset transmit power is not less than a power required to compensate for asymmetry between the first station and the second station.

A shared network includes multiple stations. The first station and the second station each are one of the multiple stations in the shared network.

The second station periodically sends the maintenance packet outward. The maintenance packet may be received by some neighboring stations.

In the shared network, cycles of sending a maintenance packet by all the stations are consistent. Each station needs to periodically send a maintenance packet and receive a maintenance packet, and each station sends a same quantity of maintenance packets in all cycles.

What is different from the prior art is that no feedback is required in a relay station selection process in the present invention, and therefore, a maintenance packet required for a feedback is saved, so that a quantity of maintenance packets is reduced, and occupied bandwidth resources are reduced.

In some possible implementations, if the second station is the relay station of the first station, the second station further includes: a first receiving module, configured to receive M first service packets sent by the first station by using the maximum transmit power; and
a second sending module, configured to send N first confirmation packets to the first station, so that the first station determines a sending success rate of the first service packets according to the received N first confirmation packets and the sent M first service packets, where the first confirmation packets are used to indicate that the first service packets are received by the second station, M and N are positive integers greater than zero, and M is greater than or equal to N.

What is different from the prior art is that after a stable relay relationship is formed between the first station and the second station, when the first station needs to send the first service packets, the first station sends the first service packets to the second station by using the maximum transmit power. Because the transmit power used by the first station to send the first service packets is greater than the preset transmit power, signal strength is stronger, and there is a relatively high probability that communications channel asymmetry between the first station and the second station can be compensated for, the success rate of receiving the first service packets by the second station is quite high. Because the success rate of the first service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

In some other possible implementations, if the second station is the relay station of the first station, the second station further includes: a third sending module, configured to send P second service packets to the first station by using the maximum transmit power;
a second receiving module, configured to receive Q second confirmation packets sent by the first station; and
a determining module, configured to determine a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

What is different from the prior art is that when the second station needs to send the second service packets, the second station sends the second service packets to the first station by using the maximum transmit power. Because the transmit power used by the second station to send the second service packets is greater than the preset transmit power, and signal strength is stronger, the success rate of receiving the second service packets by the first station is quite high. Because the success rate of the second service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

It can be learned from the foregoing technical solutions that the embodiments of the present invention have the following advantages: No feedback is required in a relay station selection process in the present invention, and therefore, a maintenance packet required for a feedback is saved, so that a quantity of maintenance packets is reduced, and occupied bandwidth resources are reduced.

### BRIEF DESCRIPTION OF DRAWINGS

FIG. 1 is a network topology diagram including stations in a power line network according to an embodiment of the present invention;
FIG. 2 is a schematic diagram of a physical connection of a power line network according to an embodiment of the present invention;
FIG. 3 is a schematic diagram of an embodiment of a method for selecting a relay station in a power line network according to an embodiment of the present invention;
FIG. 4 is a schematic diagram of another embodiment of a method for selecting a relay station in a power line network according to an embodiment of the present invention;
FIG. 5 is a schematic diagram of another embodiment of a method for selecting a relay station in a power line network according to an embodiment of the present invention;
FIG. 6 is a schematic structural diagram of a first station according to an embodiment of the present invention;
FIG. 7 is another schematic structural diagram of a first station according to an embodiment of the present invention;
FIG. 8 is another schematic structural diagram of a first station according to an embodiment of the present invention;
FIG. 9 is another schematic structural diagram of a first station according to an embodiment of the present invention;
FIG. 10 is a schematic structural diagram of a second station according to an embodiment of the present invention;
FIG. 11 is another schematic structural diagram of a second station according to an embodiment of the present invention;
FIG. 12 is another schematic structural diagram of a second station according to an embodiment of the present invention; and
FIG. 13 is another schematic structural diagram of a second station according to an embodiment of the present invention.

### DESCRIPTION OF EMBODIMENTS

Embodiments of the present invention provide a method for selecting a relay station, and a station, so as to reduce a quantity of maintenance packets and reduce occupied bandwidth resources.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way is interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The following first simply describes some concepts that may be used in the embodiments of the present invention.

Power control: a power control technology, which is relatively mature and has various forms. Direct adjustment may be performed by adjusting a current, a voltage, impedance, or the like, or the power control is implemented by using a module such as an analog front end (AFE), a digital gain module, or a power amplifier.

Signal strength: The signal strength directly affects communication quality. In a same condition, if a communication signal is strong, a signal transmission distance is long, and communication quality is high; or if a communication signal is weak, a signal transmission distance is short, and communication quality is poor.

Asymmetry: There is signal quality asymmetry between two stations in a power line network. For example, physical locations of a station A and a station B are fixed, and a power line connection is also fixed and does not change. However, because a random event such as startup, shutdown, power change, or load change occurs on another electrical device, for example, a household appliance, connected to a power line between the station A and the station B, impedance between the station A and the station B accordingly changes, and then, communication signal strength accordingly changes. Theoretically, in an ideal condition, the impedance between the station A and the station B is symmetric. However, according to actual testing, the impedance is not entirely symmetric in the power line network. Impedance from the station A to the station B may be higher, and impedance from the station B to the station A may be lower. There are many reasons for such asymmetry. Although there is currently no exact mathematical model, the asymmetry exists and is determined. Because there is the impedance asymmetry, asymmetry exists in strength of a carrier communication signal in the power line network.

Time-varying characteristic: In the power line network, multiple families or multiple appliance devices may be connected to a same power line branch. Startup or shutdown of the appliance devices, and appliance characteristic change during use of the appliance devices are non-linear, unpredictable, and time-varying, and consequently, signal strength randomly changes. Therefore, according to actual testing data, channel impedance in the power line network has a time-varying characteristic, that is, the channel impedance is different in different time periods.

The following describes a method for selecting a relay station in a power line network in the embodiments of the present invention from a perspective of interaction between a first station and a second station.

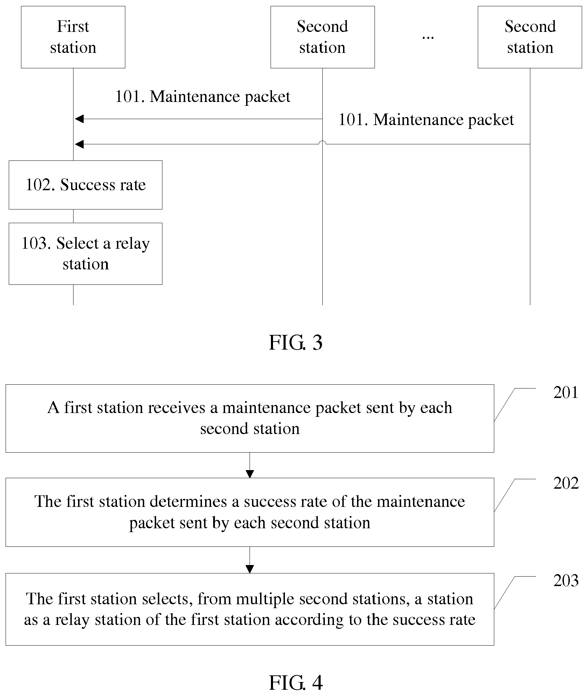

Referring to FIG. 3, an embodiment of a method for selecting a relay station in a power line network in the embodiments of the present invention includes the following steps.

101. Each of multiple second stations sends a maintenance packet to a first station.

In this embodiment, a power line network includes the first station and the multiple second stations, each second station sends the maintenance packet by using a preset transmit power, and a difference between a maximum transmit power supported by each second station and the preset transmit power is not less than a power required to compensate for asymmetry between the first station and each second station. The preset transmit power may be a transmit power obtained by means of actual testing in a project development process. The preset transmit power is a transmit power lower than the maximum transmit power.

A shared network includes multiple stations. The first station is one of the multiple stations in the shared network, and the multiple second stations are stations in the multiple stations in the shared network other than the first station.

The second station periodically sends the maintenance packet outward. The maintenance packet may be received by some neighboring stations. The second station may send one maintenance packet or multiple maintenance packets in one cycle. This is not limited herein.

It should be noted that, in the shared network, cycles of sending a maintenance packet by all the stations are consistent. Each station needs to periodically send a maintenance packet and receive a maintenance packet, and each station sends a same quantity of maintenance packets in all cycles.

In addition, the maintenance packet does not need to carry data content, and a packet of a minimum size may be used as the maintenance packet for sending.

102. The first station determines a success rate of the maintenance packet sent by each second station.

In this embodiment, the first station receives the maintenance packet sent by each second station. In the shared network, cycles of sending a maintenance packet by all the second stations are consistent, and each station sends a same quantity of maintenance packets in all cycles. Therefore, the first station may determine, according to a quantity of received maintenance packets and a quantity of maintenance packets sent by each second station, the success rate of the maintenance packet sent by each second station.

For example, it is assumed that the multiple second stations include a station A, a station B, and a station C. If the quantity of maintenance packets is ten, the first station receives eight maintenance packets in ten maintenance packets sent by the station A, the first station receives nine maintenance packets in ten maintenance packets sent by the station B, and the first station receives all ten maintenance packets sent by the station C, a success rate of receiving, by the first station, the ten maintenance packets sent by the station A is 80%, a success rate of receiving, by the first station, the ten maintenance packets sent by the station B is 90%, and a success rate of receiving, by the first station, the ten maintenance packets sent by the station C is 100%.

103. The first station selects, from the multiple second stations, a station as a relay station of the first station according to the success rate.

In this embodiment, the first station obtains multiple success rates after determining the success rate of the maintenance packet sent by each second station. The first station selects, from the multiple second stations, a station as the relay station of the first station according to the obtained multiple success rates.

For example, in some embodiments of the present invention, the first station may select a station corresponding to a highest success rate as the relay station of the first station. Therefore, the selecting, by the first station from multiple second stations, a station as a relay station of the first station according to the success rate includes: determining, by the first station, the highest success rate according to the success rate, and selecting, by the first station, the second station corresponding to the highest success rate as the relay station of the first station. Apparently, in the foregoing example, the first station may select the station C as the relay station of the first station.

It should be noted that, if each of the multiple second stations periodically sends the maintenance packet by using the preset transmit power, the second station sends a same quantity of maintenance packets in all cycles. Therefore, the first station may collect, in the cycle, statistics about a quantity of received maintenance packets sent by each second station. The first station selects, from the multiple second stations, a station as the relay station of the first station according to the quantity, which is obtained by means of statistics collection in the cycle, of received maintenance packets sent by each second station, for example, selects a second station as the relay station of the first station, where a quantity, which is obtained by means of statistics collection in the cycle, of received maintenance packets sent by the second station is the largest.

In addition, when the first station receives the maintenance packet, the first station may determine quality of a communications channel between the first station and the sender of the maintenance packet according to a parameter such as signal strength or a signal-to-noise ratio of the maintenance packet, and the first station may further select the relay station according to the receiving success rate and the communications channel quality. For example, when the receiving success rates are the same, the first station further compares communications channel quality, and selects a station with high communications channel quality as the relay station.

The maintenance packet is represented by a carrier communication signal after being sent on a line. The signal strength is energy intensity or power strength of the carrier communication signal. The signal-to-noise ratio refers to a result of comparison between the strength of the carrier communication signal and noise intensity, that is, a result of dividing the signal strength by the noise intensity.

In this embodiment, no feedback is required in a relay station selection process, and therefore, a maintenance packet required for a feedback is saved, so that a quantity of maintenance packets is reduced, and occupied bandwidth resources are reduced.

The foregoing describes the method for selecting a relay station in a power line network in the embodiments of the present invention from a perspective of interaction between a first station and a second station. The following describes a method for selecting a relay station in a power line network in the embodiments of the present invention from a perspective of a first station.

Referring to FIG. 4, an embodiment of a method for selecting a relay station in a power line network in the embodiments of the present invention includes the following steps.

201. A first station receives a maintenance packet sent by each second station.

202. The first station determines a success rate of the maintenance packet sent by each second station.

203. The first station selects, from multiple second stations, a station as a relay station of the first station according to the success rate.

In this embodiment, for step 201 to step 203, refer to the foregoing step 101 to step 103, and details are not described herein again.

In this embodiment, no feedback is required in a relay station selection process, and therefore, a maintenance packet required for a feedback is saved, so that a quantity of maintenance packets is reduced, and occupied bandwidth resources are reduced.

Optionally, based on the embodiment corresponding to FIG. 4, in a first optional embodiment of the method for selecting a relay station in a power line network provided in the embodiments of the present invention, after the selecting, by the first station from multiple second stations, a station as a relay station of the first station according to the success rate, the method further includes:
sending, by the first station, M first service packets to the relay station by using a maximum transmit power;
receiving, by the first station, N first confirmation packets sent by the relay station, where the first confirmation packets are used to indicate that the first service packets are received by the relay station, M and N are positive integers greater than zero, and M is greater than or equal to N;
determining, by the first station, a sending success rate of the first service packets according to the received N first confirmation packets and the sent M first service packets;
determining, by the first station, whether the sending success rate of the first service packets is greater than a preset threshold; and
if the sending success rate of the first service packets is greater than the preset threshold, skipping initiating a change operation for the relay station; or if the sending success rate of the first service packets is less than or equal to the preset threshold, initiating a change operation for the relay station.

In this embodiment, in actual application, the first station may set a transmit power control range. The transmit power control range includes at least two levels: a preset transmit power and the maximum transmit power. A difference between the maximum transmit power and the preset transmit power needs to be greater than or equal to a power required to compensate for asymmetry between the first station and the second station. For example, if the transmit power control range is from 0 dB to 30 dB (including 0 dB and 30 dB), the maximum transmit power is 30 dB, and the preset transmit power may be 25 dB.

In an application scenario, it is assumed that a station 1 and a station 2 are neighboring stations, the station 1 sends a service packet outward by using a maximum transmit power, the station 2 sends a maintenance packet outward by using a preset transmit power, the station 1 receives the maintenance packet sent by the station 2, and the station 2 receives the service packet sent by the station 1. If an error rate of the service packet sent by the station 1 to the station 2 is the same as or close to an error rate of the maintenance packet sent by the station 2 to the station 1, the maximum transmit power used by the station 1 and the preset transmit power used by the station 2 may be determined as two levels in a transmit power control range.

In addition, it should be clear that all stations in a shared network use a same maximum transmit power parameter and a same preset transmit power parameter.

During change evaluation of the relay station, if the sending success rate of the first service packets is relatively high, for example, if the sending success rate is greater than the preset threshold, the change evaluation of the relay station may end, and the change operation may not be initiated for the relay station. Alternatively, if the sending success rate of the first service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

The preset threshold may be set by the first station, for example, the preset threshold is 80%.

For example, for a station M and a station N, if the station N can successfully receive a maintenance packet sent by the station M, there is a higher probability that the station N can successfully receive a service packet sent by the station M. Because the service packet is sent by using a higher transmit power and has stronger signal strength, a sending success rate of the service packet sent by the station M is ensured.

For another example, for a station M and a station N, if the station N can successfully receive a maintenance packet sent by the station M, there is a higher probability that the station M can successfully receive a service packet sent by the station N. Although there may be asymmetry between the station M and the station N, a transmit power used for the service packet is greater than a transmit power used for the maintenance packet. Therefore, signal strength is stronger, and there is a relatively high probability that the communications channel asymmetry can be compensated for. In this case, a sending success rate of the service packet sent by the station N is ensured.

In this embodiment, the maintenance packet and the first service packets are sent by using different transmit powers. In a network topology formed by using the maintenance packet, when the first service packets are transmitted, because the transmit power used to transmit the first service packets between the first station and the relay station is greater than the preset transmit power, the success rate is higher in a process of transmitting the first service packets, and the success rate exceeds a success rate of the maintenance packet. Because the success rate of the first service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

Optionally, based on the embodiment corresponding to FIG. 4 or the first embodiment corresponding to FIG. 4, in a second optional embodiment of the method for selecting a relay station in a power line network provided in the embodiments of the present invention, after the selecting, by the first station from multiple second stations, a station as a relay station of the first station according to the success rate, the method further includes:
receiving, by the first station, P second service packets sent by the relay station by using the maximum transmit power; and
sending, by the first station, Q second confirmation packets to the relay station, so that the relay station determines a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

During change evaluation of the relay station, if the sending success rate of the second service packets is relatively high, for example, if the sending success rate is greater than the preset threshold, the change evaluation of the relay station may end, and the change operation may not be initiated for the relay station. Alternatively, if the sending success rate of the second service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

The preset threshold may be set by the first station, for example, the preset threshold is 80%; or may be another proper value. This is not limited herein.

In this embodiment, the maintenance packet and the second service packets are sent by using different transmit powers. In a network topology formed by using the maintenance packet, when the second service packets are transmitted, because the transmit power used by the relay station to transmit the second service packets is greater than the preset transmit power, the success rate is higher in a process of transmitting the second service packets, and the success rate exceeds a success rate of the maintenance packet. Because the success rate of the second service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

Optionally, based on the embodiment corresponding to FIG. 4, the first embodiment corresponding to FIG. 4, or the second embodiment corresponding to FIG. 4, in a third optional embodiment of the method for selecting a relay station in a power line network provided in the embodiments of the present invention, the selecting, by the first station from multiple second stations, a station as a relay station of the first station according to the success rate includes:
determining, by the first station, a highest success rate according to the success rate; and
selecting, by the first station, a second station corresponding to the highest success rate as the relay station of the first station.

In this embodiment, the highest success rate is selected by the first station from multiple success rates.

The following describes a method for selecting a relay station in a power line network in the embodiments of the present invention from a perspective of a second station.

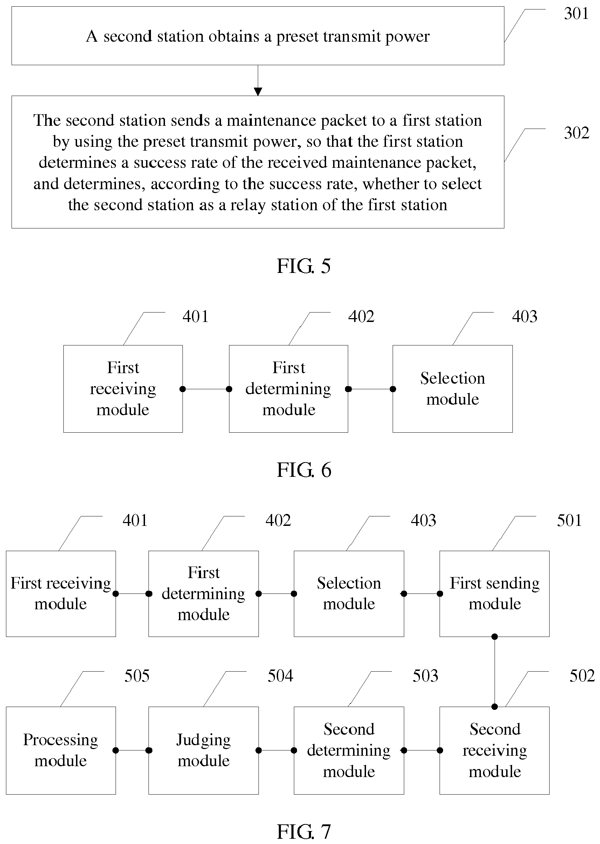

Referring to FIG. 5, another embodiment of a method for selecting a relay station in a power line network in the embodiments of the present invention includes the following steps.

301. A second station obtains a preset transmit power.

302. The second station sends a maintenance packet to a first station by using the preset transmit power, so that the first station determines a success rate of the received maintenance packet, and determines, according to the success rate, whether to select the second station as a relay station of the first station.

In this embodiment, a difference between a maximum transmit power supported by the second station and the preset transmit power is not less than a power required to compensate for asymmetry between the first station and the second station.

In addition, when the first station receives the maintenance packet, the first station may determine quality of a communications channel between the first station and the second station according to a parameter such as signal strength or a signal-to-noise ratio of the maintenance packet, and the first station may further determine, according to the receiving success rate and the communications channel quality, whether to select the second station as the relay station of the first station.

In this embodiment, for step 301 and step 302, refer to the foregoing step 101 to step 103, and details are not described herein again.

In this embodiment, no feedback is required in a relay station selection process, and therefore, a maintenance packet required for a feedback is saved, so that a quantity of maintenance packets is reduced, and occupied bandwidth resources are reduced.

Optionally, based on the embodiment corresponding to FIG. 5, in a first optional embodiment of the method for selecting a relay station in a power line network provided in the embodiments of the present invention, if the second station is the relay station of the first station, after the sending, by the second station, a maintenance packet to a first station by using the preset transmit power, the method further includes:
receiving, by the second station, M first service packets sent by the first station by using the maximum transmit power; and
sending, by the second station, N first confirmation packets to the first station, so that the first station determines a sending success rate of the first service packets according to the received N first confirmation packets and the sent M first service packets, where the first confirmation packets are used to indicate that the first service packets are received by the second station, M and N are positive integers greater than zero, and M is greater than or equal to N.

Each time when the first station sends a first service packet to the second station, the first station waits for a first confirmation packet sent by the second station. If the first station receives the first confirmation packet, the first service packet sent by the first station is successfully sent. Therefore, the sending success rate of the first service packets is obtained by the first station by means of statistics collection according to a total quantity of sending successes of first service packets in a specific time.

In this embodiment, after a stable relay relationship is formed between the first station and the second station, when the first station needs to send the first service packets, the first station sends the first service packets to the second station by using the maximum transmit power. Because the transmit power used by the first station to send the first service packets is greater than the preset transmit power, signal strength is stronger, and there is a relatively high probability that communications channel asymmetry between the first station and the second station can be compensated for, the success rate of receiving the first service packets by the second station is quite high. Because the success rate of the first service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

Optionally, based on the embodiment corresponding to FIG. 5 or the first embodiment corresponding to FIG. 5, in a second optional embodiment of the method for selecting a relay station in a power line network provided in the embodiments of the present invention, if the second station is the relay station of the first station, after the sending, by the second station, a maintenance packet to a first station by using the preset transmit power, the method further includes:
sending, by the second station, P second service packets to the first station by using the maximum transmit power;
receiving, by the second station, Q second confirmation packets sent by the first station; and
determining, by the second station, a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

In this embodiment, when the second station needs to send the second service packets, the second station sends the second service packets to the first station by using the maximum transmit power. Because the transmit power used by the second station to send the second service packets is greater than the preset transmit power, and signal strength is stronger, the success rate of receiving the second service packets by the first station is quite high. Because the success rate of the second service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

The foregoing embodiments describe the method for selecting a relay station in a power line network in the embodiments of the present invention. The following describes a first station in a power line network in the embodiments of the present invention.

Referring to FIG. 6, an embodiment of a first station in a power line network in the embodiments of the present invention includes:
a first receiving module 401, configured to receive a maintenance packet sent by each second station, where each second station sends the maintenance packet by using a preset transmit power, and a difference between a maximum transmit power supported by each second station and the preset transmit power is not less than a power required to compensate for asymmetry between the first station and each second station;
a first determining module 402, configured to determine a success rate of the maintenance packet sent by each second station; and
a selection module 403, configured to select, from multiple second stations, a station as a relay station of the first station according to the success rate.

In this embodiment, no feedback is required in a relay station selection process, and therefore, a maintenance packet required for a feedback is saved, so that a quantity of maintenance packets is reduced, and occupied bandwidth resources are reduced.

Optionally, based on the embodiment corresponding to FIG. 6, referring to FIG. 7, in another embodiment of the first station provided in the embodiments of the present invention, the first station further includes:
a first sending module 501, configured to send M first service packets to the relay station by using the maximum transmit power;
a second receiving module 502, configured to receive N first confirmation packets sent by the relay station, where the first confirmation packets are used to indicate that the first service packets are received by the relay station, M and N are positive integers greater than zero, and M is greater than or equal to N;
a second determining module 503, configured to determine a sending success rate of the first service packets according to the received N first confirmation packets and the sent M first service packets;
a judging module 504, configured to determine whether the sending success rate of the first service packets is greater than a preset threshold; and
a processing module 505, configured to: if the sending success rate of the first service packets is greater than the preset threshold, skip initiating a change operation for the relay station; or if the sending success rate of the first service packets is less than or equal to the preset threshold, initiate a change operation for the relay station.

In this embodiment, the maintenance packet and the first service packets are sent by using different transmit powers. In a network topology formed by using the maintenance packet, when the first service packets are transmitted, because the transmit power used by the first station to transmit the first service packets is greater than the preset transmit power, the success rate is higher in a process of transmitting the first service packets, and the success rate exceeds a success rate of the maintenance packet. Because the success rate of the first service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

During change evaluation of the relay station, if the sending success rate of the first service packets is relatively high, for example, if the sending success rate is greater than the preset threshold, the change evaluation of the relay station may end, and the change operation may not be initiated for the relay station. Alternatively, if the sending success rate of the first service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

The preset threshold may be set by the first station, for example, the preset threshold is 80%.

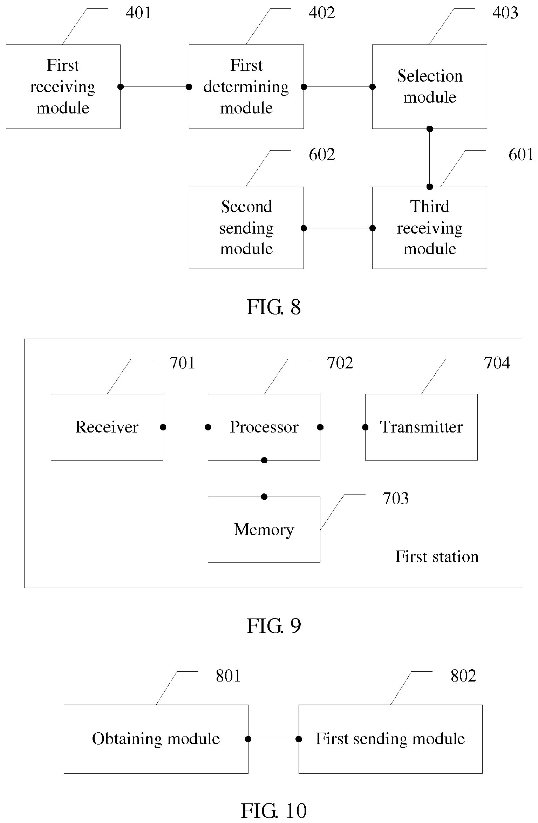

Optionally, based on the embodiment corresponding to FIG. 6, referring to FIG. 8, in another embodiment of the first station provided in the embodiments of the present invention, the first station further includes:
a third receiving module 601, configured to receive P second service packets sent by the relay station by using the maximum transmit power; and
a second sending module 602, configured to send Q second confirmation packets to the relay station, so that the relay station determines a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

During change evaluation of the relay station, if the sending success rate of the second service packets is relatively high, for example, if the sending success rate is greater than the preset threshold, the change evaluation of the relay station may end, and the change operation may not be initiated for the relay station. Alternatively, if the sending success rate of the second service packets is relatively low, for example, if the sending success rate is less than or equal to the preset threshold, it is determined that the relay station needs to be changed. When the relay station is being changed, a new relay station may be selected. For example, selection is performed according to a default relay station selection mechanism. After being successfully selected, the new relay station is determined and disclosed by using a normal network maintenance mechanism.

In this embodiment, the maintenance packet and the second service packets are sent by using different transmit powers. In a network topology formed by using the maintenance packet, when the second service packets are transmitted, because the transmit power used by the relay station to transmit the second service packets is greater than the preset transmit power, the success rate is higher in a process of transmitting the second service packets, and the success rate exceeds a success rate of the maintenance packet. Because the success rate of the second service packets is relatively high, the relay station does not need to be frequently changed. Therefore, the network topology is in a convergent state that is relatively stable. Because of stability of the network topology, a quantity of maintenance packets is further reduced, and occupied bandwidth resources are reduced.

It should be noted that, if the first station does not receive, in preset duration, a maintenance packet sent by the relay station, the first station triggers the change operation for the relay station.

The preset duration may be one cycle. If the first station cannot successfully receive, in one entire cycle, a maintenance packet sent by the relay station, the first station may trigger a relay station change evaluation operation.

Optionally, based on an embodiment corresponding to any one of FIG. 6 to FIG. 8, in another embodiment of the first station provided in the embodiments of the present invention, the selection module 403 is specifically configured to: determine a highest success rate according to the success rate, and select a second station corresponding to the highest success rate as the relay station of the first station.

The foregoing describes the first station in the embodiments of the present invention from a perspective of a modular functional entity, and the following describes the first station in the embodiments of the present invention from a perspective of hardware processing. Referring to FIG. 9, a first station in an embodiment of the present invention includes: a receiver 701, a processor 702, and a memory 703.

The first station in this embodiment of the present invention may have parts more or less than those shown in FIG. 9, may be a combination of two or more parts, or may have different part configurations or settings. All parts may be implemented in hardware including one or more signal processing and/or application-specific integrated circuits, in software, or in a combination of hardware and software.

The receiver 701 is configured to perform the following operation:
receiving a maintenance packet sent by each of multiple second stations by using a preset transmit power, where a difference between a maximum transmit power supported by each second station and the preset transmit power is not less than a power required to compensate for asymmetry between the first station and each second station.

The processor 702 is configured to invoke an instruction stored in the memory 703, to perform the following operations:
determining a success rate of the maintenance packet sent by each second station, and selecting, from the multiple second stations, a station as a relay station of the first station according to the success rate.

The memory 703, configured to store the instruction required for performing the corresponding operations by the processor 702.

Optionally, the first station further includes a transmitter 704, and the transmitter 704 is configured to perform the following operation:
sending M first service packets to the relay station by using the maximum transmit power.

The receiver 701 is further configured to perform the following operation:
receiving N first confirmation packets sent by the relay station, where the first confirmation packets are used to indicate that the first service packets are received by the relay station, M and N are positive integers greater than zero, and M is greater than or equal to N.

The processor 702 is further configured to perform the following operations: determining a sending success rate of the first service packets according to the received N first confirmation packets and the sent M first service packets; determining whether the sending success rate of the first service packets is greater than a preset threshold; and if the sending success rate of the first service packets is greater than the preset threshold, skipping initiating a change operation for the relay station; or if the sending success rate of the first service packets is less than or equal to the preset threshold, initiating a change operation for the relay station.

Optionally, the receiver 701 is further configured to perform the following operation: receiving P second service packets sent by the relay station by using the maximum transmit power.

The transmitter 704 is further configured to perform the following operation: sending Q second confirmation packets to the relay station, so that the relay station determines a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

Optionally, the processor 702 is specifically configured to perform the following operation:
determining a highest success rate according to the success rate, and selecting a second station corresponding to the highest success rate as the relay station of the first station.

The following describes a second station in the embodiments of the present invention.

Referring to FIG. 10, an embodiment of a second station in the embodiments of the present invention includes:
an obtaining module 801, configured to obtain a preset transmit power; and
a first sending module 802, configured to send a maintenance packet to a first station by using the preset transmit power, so that the first station determines a success rate of the received maintenance packet, and determines, according to the success rate, whether to select the second station as a relay station of the first station.

A difference between a maximum transmit power supported by the second station and the preset transmit power is not less than a power required to compensate for asymmetry between the first station and the second station.

In this embodiment, no feedback is required in a relay station selection process, and therefore, a maintenance packet required for a feedback is saved, so that a quantity of maintenance packets is reduced, and occupied bandwidth resources are reduced.

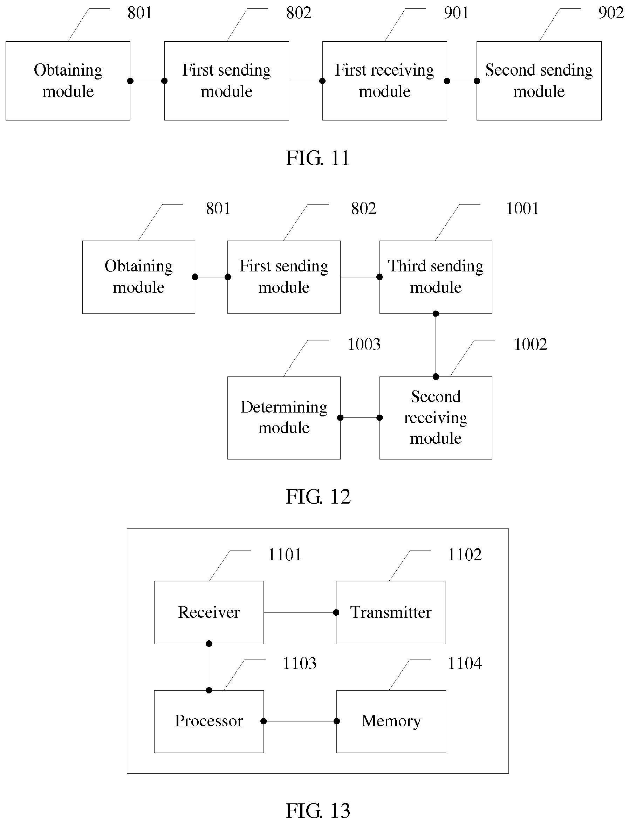

Optionally, based on the embodiment corresponding to FIG. 10, referring to FIG. 11, in another embodiment of the second station provided in the embodiments of the present invention, if the second station is the relay station of the first station, the second station further includes:
a first receiving module 901, configured to receive M first service packets sent by the first station by using the maximum transmit power; and
a second sending module 902, configured to send N first confirmation packets to the first station, so that the first station determines a sending success rate of the first service packets according to the received N first confirmation packets and the sent M first service packets, where the first confirmation packets are used to indicate that the first service packets are received by the second station, M and N are positive integers greater than zero, and M is greater than or equal to N.

In this embodiment, after a stable relay relationship is formed between the first station and the second station, when the first station needs to send the first service packets, the first station sends the first service packets to the first receiving module 901 by using the maximum transmit power. Because the transmit power used by the first station to send the first service packets is greater than the preset transmit power, signal strength is stronger, and there is a relatively high probability that communications channel asymmetry between the first station and the second station can be compensated for, the sending success rate of the first service packets is ensured. Because the sending success rate of the first service packets is ensured, the relay station of the first station does not need to be frequently changed. Therefore, a network topology is in a convergent state that is relatively stable. Because of stability of the network topology, a quantity of maintenance packets is reduced, and occupied bandwidth resources are reduced.

In addition, when the first station receives the maintenance packet, the first station may determine quality of a communications channel between the first station and the second station according to a parameter such as signal strength or a signal-to-noise ratio of the maintenance packet, and the first station may further determine, according to the receiving success rate and the communications channel quality, whether to select the second station as the relay station of the first station.

Optionally, based on the embodiments corresponding to FIG. 10, referring to FIG. 12, in another embodiment of the second station provided in the embodiments of the present invention, if the second station is the relay station of the first station, the second station further includes:
a third sending module 1001, configured to send P second service packets to the first station by using the maximum transmit power;
a second receiving module 1002, configured to receive Q second confirmation packets sent by the first station; and
a determining module 1003, configured to determine a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

In this embodiment, when the third sending module 1001 needs to send the second service packets, the third sending module 1001 sends the second service packets to the first station by using the maximum transmit power. Because the transmit power used by the third sending module 1001 to send the second service packets is greater than the preset transmit power, and signal strength is stronger, the success rate of receiving the second service packets by the first station is quite high. Because the success rate of the second service packets is relatively high, the relay station of the first station does not need to be frequently changed. Therefore, a network topology is in a convergent state that is relatively stable. Because of stability of the network topology, a quantity of maintenance packets is reduced, and occupied bandwidth resources are reduced.

The foregoing describes the second station in the embodiments of the present invention from a perspective of a modular functional entity, and the following describes the second station in the embodiments of the present invention from a perspective of hardware processing. Referring to FIG. 13, a second station in an embodiment of the present invention includes: a receiver 1101 and a transmitter 1102.

The second station in this embodiment of the present invention may have parts more or less than those shown in FIG. 13, may be a combination of two or more parts, or may have different part configurations or settings. All parts may be implemented in hardware including one or more signal processing and/or application-specific integrated circuits, in software, or in a combination of hardware and software.

The receiver 1101 is configured to perform the following operation:
receiving a preset transmit power.

The transmitter 1102 is configured to perform the following operation:
sending a maintenance packet to a first station by using the preset transmit power, so that the first station determines a success rate of the received maintenance packet, and determines, according to the success rate, whether to select the second station as a relay station of the first station.

A difference between a maximum transmit power supported by the second station and the preset transmit power is not less than a power required to compensate for asymmetry between the first station and the second station.

Optionally, if the second station is the relay station of the first station, the receiver 1101 is further configured to perform the following operation:
receiving M first service packets sent by the first station by using the maximum transmit power.

The transmitter 1102 is further configured to perform the following operation:
sending N first confirmation packets to the first station, so that the first station determines a sending success rate of the first service packets according to the received N first confirmation packets and the sent M first service packets, where the first confirmation packets are used to indicate that the first service packets are received by the second station, M and N are positive integers greater than zero, and M is greater than or equal to N.

Optionally, if the second station is the relay station of the first station, the transmitter 1102 is further configured to perform the following operation: sending P second service packets to the first station by using the maximum transmit power.

The receiver 1101 is further configured to perform the following operation: receiving Q second confirmation packets sent by the first station. The second station further includes a processor 1103, configured to invoke an instruction stored in a memory 1104, to perform the following operation: determining a sending success rate of the second service packets according to the received Q second confirmation packets and the sent P second service packets, where the second confirmation packets are used to indicate that the second service packets are received by the first station, P and Q are positive integers greater than zero, and P is greater than or equal to Q.

The second station further includes the memory 1104, configured to store the instruction required for performing the corresponding operation by the processor 1103.

It may be clearly understood by persons skilled in the art that, for the purpose of convenient and brief description, for a detailed working process of the foregoing apparatus and module, reference may be made to a corresponding process in the foregoing method embodiments, and details are not described herein.

In the several embodiments provided in this application, it should be understood that the disclosed apparatus and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected according to actual needs to achieve the objectives of the solutions of the embodiments.

In addition, functional modules in the embodiments of the present invention may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for selecting a relay station in a power line network, wherein the power line network comprises a first station and multiple second stations, and the method comprises:
receiving, by the first station, a maintenance packet sent by each second station, wherein each second station sends the maintenance packet by using a preset transmit power, and a difference between a maximum transmit power supported by each second station and the preset transmit power is not less than a power required to compensate for asymmetry between the first station and each second station;
determining, by the first station, a success rate of the maintenance packet sent by each second station; and
selecting, by the first station from the multiple second stations, a station as a relay station of the first station according to the success rate.

2. The method according to claim 1, after the selecting, by the first station from the multiple second stations, a station as a relay station of the first station according to the success rate, further comprising:
sending, by the first station, M first service packets to the relay station by using the maximum transmit power;
receiving, by the first station, N first confirmation packets sent by the relay station, wherein the first confirmation packets are used to indicate that the first service packets are received by the relay station, M and N are positive integers, and M is greater than or equal to N;
determining, by the first station, a sending success rate of the first service packets according to the received N first confirmation packets and the sent M first service packets;
determining, by the first station, whether the sending success rate of the first service packets is greater than a preset threshold; and
if the sending success rate of the first service packets is greater than the preset threshold, skipping initiating a change operation for the relay station; or if the sending success rate of the first service packets is less than or equal to the preset threshold, initiating a change operation for the relay station.

3. The method according to claim 1 or 2, after the selecting, by the first station from the multiple second stations, a station as a relay station of the first station according to the success rate, further comprising:
receiving, by the first station, P second service packets sent by the relay station by using the maximum transmit power; and
sending, by the first station, Q second confirmation packets to the relay station, so that the relay station determines a sending success rate of the second service packets according to the received Q second confirmation packets and the sent P second service packets, wherein the second confirmation packets are used to indicate that the second service packets are received by the first station, P and Q are positive integers greater than zero, and P is greater than or equal to Q.

4. The method according to any one of claims 1 to 3, wherein the selecting, by the first station from the multiple second stations, a station as a relay station of the first station according to the success rate comprises:
determining, by the first station, a highest success rate according to the success rate; and
selecting, by the first station, a second station corresponding to the highest success rate as the relay station of the first station.

5. A method for selecting a relay station in a power line network, wherein the method comprises:
obtaining, by a second station, a preset transmit power; and
sending, by the second station, a maintenance packet to a first station by using the preset transmit power, so that the first station determines a success rate of the received maintenance packet, and determines, according to the success rate, whether to select the second station as a relay station of the first station; wherein
a difference between a maximum transmit power supported by the second station and the preset transmit power is not less than a power required to compensate for asymmetry between the first station and the second station.

6. The method according to claim 5, if the second station is the relay station of the first station, after the sending, by the second station, a maintenance packet to a first station by using the preset transmit power, further comprising:
receiving, by the second station, M first service packets sent by the first station by using the maximum transmit power; and
sending, by the second station, N first confirmation packets to the first station, so that the first station determines a sending success rate of the first service packets according to the received N first confirmation packets and the sent M first service packets, wherein the first confirmation packets are used to indicate that the first service packets are received by the second station, M and N are positive integers greater, and M is greater than or equal to N.

7. The method according to claim 5 or 6, if the second station is the relay station of the first station, after the sending, by the second station, a maintenance packet to a first station by using the preset transmit power, further comprising:
sending, by the second station, P second service packets to the first station by using the maximum transmit power;
receiving, by the second station, Q second confirmation packets sent by the first station; and
determining, by the second station, a sending success rate of the second service packets according to the received Q second confirmation packets and the sent P second service packets, wherein the second confirmation packets are used to indicate that the second service packets are received by the first station, P and Q are positive integers greater than zero, and P is greater than or equal to Q.

8. A first station in a power line network, comprising:
a first receiving module, configured to receive a maintenance packet sent by each second station, wherein each second station sends the maintenance packet by using a preset transmit power, and a difference between a maximum transmit power supported by each second station and the preset transmit power is not less than a power required to compensate for asymmetry between the first station and each second station;
a first determining module, configured to determine a success rate of the maintenance packet sent by each second station; and
a selection module, configured to select, from multiple second stations, a station as a relay station of the first station according to the success rate.

9. The first station according to claim 8, wherein the first station further comprises:
a first sending module, configured to send M first service packets to the relay station by using the maximum transmit power;
a second receiving module, configured to receive N first confirmation packets sent by the relay station, wherein the first confirmation packets are used to indicate that the first service packets are received by the relay station, M and N are positive integers, and M is greater than or equal to N;
a second determining module, configured to determine a sending success rate of the first service packets according to the received N first confirmation packets and the sent M first service packets;
a judging module, configured to determine whether the sending success rate of the first service packets is greater than a preset threshold; and
a processing module, configured to: if the sending success rate of the first service packets is greater than the preset threshold, skip initiating a change operation for the relay station; or if the sending success rate of the first service packets is less than or equal to the preset threshold, initiate a change operation for the relay station.

10. The first station according to claim 8 or 9, wherein the first station further comprises:
a third receiving module, configured to receive P second service packets sent by the relay station by using the maximum transmit power; and
a second sending module, configured to send Q second confirmation packets to the relay station, so that the relay station determines a sending success rate of the second service packets according to the received Q second confirmation packets and the sent P second service packets, wherein the second confirmation packets are used to indicate that the second service packets are received by the first station, P and Q are positive integers greater than zero, and P is greater than or equal to Q.

11. The first station according to any one of claims 8 to 10, wherein the selection module is specifically configured to: determine a highest success rate according to the success rate, and select a second station corresponding to the highest success rate as the relay station of the first station.

12. A second station in a power line network, comprising:
an obtaining module, configured to obtain a preset transmit power; and
a first sending module, configured to send a maintenance packet to a first station by using the preset transmit power, so that the first station determines a success rate of the received maintenance packet, and determines, according to the success rate, whether to select the second station as a relay station of the first station; wherein
a difference between a maximum transmit power supported by the second station and the preset transmit power is not less than a power required to compensate for asymmetry between the first station and the second station.

13. The second station according to claim 12, wherein if the second station is the relay station of the first station, the second station further comprises:
a first receiving module, configured to receive M first service packets sent by the first station by using the maximum transmit power; and
a second sending module, configured to send N first confirmation packets to the first station, so that the first station determines a sending success rate of the first service packets according to the received N first confirmation packets and the sent M first service packets, wherein the first confirmation packets are used to indicate that the first service packets are received by the second station, M and N are positive integers, and M is greater than or equal to N.

14. The second station according to claim 12 or 13, wherein if the second station is the relay station of the first station, the second station further comprises:
a third sending module, configured to send P second service packets to the first station by using the maximum transmit power;
a second receiving module, configured to receive Q second confirmation packets sent by the first station; and
a determining module, configured to determine a sending success rate of the second service packets according to the received Q second confirmation packets and the sent P second service packets, wherein the second confirmation packets are used to indicate that the second service packets are received by the first station, P and Q are positive integers greater than zero, and P is greater than or equal to Q.
